# EUROPÄISCHE PATENTSCHRIFT

(11) **EP 3 449 151 B1**
(45) Veröffentlichungstag und Bekanntmachung des Hinweises auf die Patenterteilung: **09.08.2023**
(21) Anmeldenummer: 17705352.7
(22) Anmeldetag: 13.02.2017
(51) Int. Cl.: F16F 13/10

(54) **HYDROLAGER, INSBESONDERE STEUERBARES HYDROLAGER**
HYDRAULIC BEARING, IN PARTICULAR A CONTROLLABLE HYDRAULIC BEARING
PALIER HYDRAULIQUE, NOTAMMENT PALIER HYDRAULIQUE COMMANDABLE

(30) Priorität: 25.04.2016 DE 102016206948
(43) Veröffentlichungstag der Anmeldung: 06.03.2019
(73) Patentinhaber: ContiTech Vibration Control GmbH, 30165 Hannover (DE)
(72) Erfinder: GENDERJAHN, Robert, 30625 Hannover (DE)
(74) Vertreter: Continental Corporation
(86) Internationale Anmeldenummer: PCT/EP2017/053095
(87) Internationale Veröffentlichungsnummer: WO 2017/186368

(56) Entgegenhaltungen:
- CN-B- 102 431 431
- US-A1- 2010 201 053
- US-A1- 2012 299 229
- US-A1- 2013 043 626

## Beschreibung

Die vorliegende Erfindung betrifft ein Hydrolager, insbesondere ein steuerbares Hydrolager, gemäß dem Oberbegriff des Anspruchs 1, einen Motor mit einem derartigen Hydrolager gemäß dem Anspruch 12 sowie ein Kraftfahrzeug mit einem derartigen Motor gemäß dem Anspruch 13.

Zur Isolation von Schwingungen sind verschiedene Arten und Ausführungen von Lagern bekannt. Zu diesen gehören die sog. Hydrolager oder auch Hydrauliklager. Sie dienen zur elastischen Abstützung von Aggregaten, insbesondere von Kraftfahrzeugmotoren. Mit Hilfe derartiger z. B. zwischen einem Motor und einem Chassis eines Kraftfahrzeugs angeordneter Hydrolager soll verhindert werden, dass sich Motor-Vibrationen auf das Fahrzeuggestell übertragen. Dabei ist der bekannte Konflikt in der Schwingungsisolation zu beachten, der darin besteht, dass das Lager einerseits möglichst steif sein soll, um hohe Lasten bzw. Lagerkräfte aufnehmen zu können, und andererseits eine weiche Charakteristik aufweisen soll, um entstehende Schwingungen über einen möglichst breiten Frequenzbereich möglichst wirkungsvoll zu isolieren.

Bei einem Hydrolager kann eine Flüssigkeit wie z.B. eine Hydraulikflüssigkeit zwischen einer Arbeitskammer und einer Ausgleichkammer über einen Drosselkanal hin und her bewegt werden. Eine Drosseleinheit trennt das Flüssigkeitsvolumen zwischen der Arbeitskammer und der Ausgleichskammer und bildet den Drosselkanal aus, der die Arbeitskammer und die Ausgleichskammer verbindet. Da der Drosselkanal einen Strömungswiderstand darstellt, können Schwingungen, welche über eine Tragfeder wie üblicherweise ein Elastomerelement auf die Arbeitskammer wirken, durch die Flüssigkeitsbewegungen durch den Drosselkanal hindurch gedämpft werden. Hierbei werden Schwingungen bis üblicherweise ca. 5 Hz durch die relativ große Steifigkeit der Tragfeder aufgenommen. Niederfrequente Schwingungen zwischen üblicherweise 5 Hz bis 20 Hz werden durch das Zusammenwirken der beiden Hydraulikkammern über den Drosselkanal gedämpft.

Es lassen sich verschiedene Arten von Hydrolagern unterscheiden:
Sog. konventionelle Hydrolager weisen den zuvor beschriebenen Aufbau und die hiermit verbundene Wirkungsweise auf, indem üblicherweise die Innenseite der elastischen Tragfeder und die eine Seite der Drosseleinheit die Arbeitskammer und eine elastische Rollmembran und die gegenüberliegende Seite der Drosseleinheit die Ausgleichkammer bilden. Die elastische Rollmembran führt zu einem variablen Volumen der Ausgleichskammer, so dass es hierdurch der üblicherweise inkompressiblen Flüssigkeit ermöglicht wird, aus der Arbeitskammer entweichen zu können. Alternativ oder zusätzlich kann auch eine elastische Entkopplungsmembran vorhanden sein, die einen elastischen Druckausgleich zwischen den beiden Hydraulikkammern ermöglichen kann. Bewegliche Teile sind außer der Elastizität der Tragfeder, der Rollmembran und bzw. oder der Entkopplungsmembran bei konventionellen Hydrolager üblicherweise nicht vorhanden.

Sog. schaltbare Hydrolager weisen grundsätzlich den gleichen Aufbau und die gleiche Wirkungsweise wie konventionelle Hydrolager auf. Zusätzlich zum Drosselkanal ist bei schaltbaren Hydrolagern jedoch ein Bypasskanal vorhanden, dessen Durchfluss schaltbar geöffnet und geschlossen werden kann. Alternativ kann auch ein Kanal zur Entlüftung einer Luftkammer unterhalb der Entkopplungsmembran schaltbar geöffnet und geschlossen werden. In beiden Fällen können durch das Öffnen bzw. Verschließen des jeweiligen Kanals zwei unterschiedliche Kennlinienverläufe der Steifigkeits- und Dämpfungscharakteristika des Lagers gewählt werden, so dass das Lager zwischen "weich" und "hart" geschaltet werden kann. Mit anderen Worten kann auf diese Art und Weise in bestimmten Situationen eine andere Steifigkeit des schaltbaren Hydrolagers eingestellt werden als im übrigen Betrieb. Diese Schaltfunktion kann durch einen elektromagnetischen Aktor ausgeführt werden.

Sog. steuerbare oder auch aktive Hydrolager entsprechen ebenfalls grundsätzlich dem Aufbau und der Wirkungsweise von konventionellen Hydrolagern, weisen jedoch eine steuerbare Möglichkeit auf, das Volumen der Arbeitskammer stufenlos zu verändern. Auf diese Weise kann aktiv auf das Isolationsverhalten des Hydrolagers eingewirkt werden. Die Steuerbarkeit wird üblicherweise über einen linear wirkenden elektromagnetischen Aktor erreicht, welcher eine Steuermembran z.B. über einen Kolben gegenüber der Arbeitskammer bewegen kann. Die Steuermembran bildet dabei einen Teil der Wandung der Arbeitskammer, so dass sich über die Bewegung der Steuermembran das Hydraulikvolumen der Arbeitskammer verändern lässt. Durch eine Ansteuerung des Aktors und des entsprechenden Einwirkens auf die Steuermembran kann eine Absenkung der dynamischen Federrate des Hydrolagers im Bereich der hochfrequenten Schwingungen bewirkt werden.

Bei den steuerbaren bzw. aktiven Hydrolagern lässt sich zwischen konventionellen steuerbaren Hydrolagern und invertierten steuerbaren Hydrolagern unterscheiden. Bei den konventionellen steuerbaren Hydrolagern drückt das Fluid direkt von der Seite der Arbeitskammer auf die Membran, die der Arbeitskammer zugewandt ist, d.h. üblicherweise von oben von der Seite der Tragfeder her. Bei invertierten steuerbaren Hydrolagern drückt die Membran von der Seite der Ausgleichskammer bzw. von der Seite des Drosselkanals auf die Membran, d.h. üblicherweise von unten von der Seite des Aktors her. In diesem Fall befindet sich üblicherweise ein konstruktionsbedingt geschlossenes Luftvolumen hinter der Membran, welches vollkommen von der Umgebung abgetrennt ist.

Alle zuvor beschriebenen Arten von Hydrolagern können als Motorlager eingesetzt werden. Das Hydrolager muss dabei vergleichsweise weich ausgelegt sein, um den Motor positionieren zu können (statische Einfederung). Hierdurch kann das weiche Motorlager entsprechend große Bewegungen des Motors zulassen. Derartige Bewegungen des Motors können z.B. beim Starten bzw. Ausschalten des Motors entstehen.

Die Arbeitskammer des Motorlagers kann hierbei durch die Bewegung der Tragfeder dynamisch verkleinert bzw. vergrößert werden. Dies hat einen Über- bzw. Unterdruck zur Folge. Insbesondere im Falle des Auftretens eines Unterdrucks besteht die Möglichkeit, dass der Dampfdruck der Flüssigkeit in den Hydraulikkammern lokal unterschritten wird. In diesem Fall kann Gas innerhalb der Hydraulikkammern des Motorlagers entstehen. Steigt der Druck innerhalb der Hydraulikkammern des Motorlagers im Laufe der Schwingung wieder an, fallen die entstandenen Gasbläschen wieder in sich zusammen und können hierbei Druckstöße erzeugen, die störende Geräusche in Form von Klopfen, Klappern o.ä. verursachen können. Man spricht hier von Kavitationseffekten. Diese können sich negativ auf das akustische Verhalten des Hydrolagers auswirken.

Um diese Kavitationseffekte bei konventionellen Hydrolagern zu vermeiden bzw. zu reduzieren ist es bekannt, ein Ventil oder mehrerer Ventile in die Arbeitskammer einzubringen. Dieses befindet sich üblicherweise in Form eines Ventilschlitzes in der Entkopplungsmembran der Drosseleinheit, so dass eine Verbindung zwischen Arbeits- und Ausgleichskammer geschaffen wird, die bei entsprechenden Druckspitzen öffnen kann. Hierdurch kann die Entstehung eines Über- bzw. Unterdrucks reduziert bzw. vermieden werden, so dass es innerhalb der Hydraulikkammern des Motorlagers gar nicht erst zur Erzeugung eines Gases kommen kann.

Derartige Ventile sind jedoch nicht bei einem steuerbaren bzw. aktiven Hydrolager anwendbar, da hier die Steuermembran stets mit einer Seite gegen eine Luftkammer (im invertierten Lager) bzw. gegen den Innenraum des Aktors (im konventionellen Lager) arbeitet. Durch dieses direkte Angrenzen der Steuermembran an einen Raum außerhalb des geschlossenen Hydraulikvolumens ist eine Schlitzung bzw. das Einbringen eines Ventils an dieser Stelle nicht möglich, weil dann Flüssigkeit aus den Hydraulikkammern austreten könnte. Dies würde das Hydrolager als solches unbrauchbar machen.

Derartige Ventile sind ferner nicht auf Hydrolager anwendbar, deren Ausgleichskammer seitlich angeordnet ist, weil bei derartigen Hydrolagern gar keine Entkopplungsmembran der Drosseleinheit vorhanden ist. Vielmehr ist ein Drosselkanal vorhanden, welcher die beiden Fluidkammern miteinander verbindet, jedoch zwischen ihnen angeordnet ist, so dass gar keine Entkopplungsmembran verwendet werden kann. Mit anderen Worten können derartige Schlitzungen der Entkopplungsmembran lediglich für einen direkten Druckausgleich zwischen Arbeits- und Ausgleichskammer angewendet werden, welche unmittelbar übereinander angeordnet sind.

Aus der JP 2008 232 340 A ist eine mit Hydraulikflüssigkeit gefüllte Vorrichtung zur Unterdrückung von kavitationsbedingten Schwingungen bekannt, welche eine druckempfangende Kammer und eine Ausgleichskammer aufweist, welche über eine Verengungspassage fluidführend miteinander verbunden sind. Es ist ein Ventil vorgesehen, welches ab einer vorbestimmten Frequenz die Strömung des Fluids durch die Verengungspassage begrenzen kann. Das Ventil kann durch eine bewegliche Klappe gebildet werden, welche von oben in den Verengungskanal hineinhängt und durch die Strömung des Fluids gegen einen starren Vorsprung der Unterseite des Verengungskanals gedrückt werden kann, so dass sich die Verengungspassage schließen kann.

Die JP 2010 169 158 A beschreibt eine vergleichbare Lösung zur Vermeidung von Kavitationseffekten bei einem hydraulischen Motorlager. Hier ist ein Ventilelement ausgebildet, die Verengungspassage zu verengen, falls eine Last auf die Hauptflüssigkeitskammer ausgeübt wird, die zu einem Anstieg des Hydraulikdruckes dort führt.

Die JP 2009 287 735 A betrifft eine fluidgefüllte Schwingungssteuerungseinrichtung, welche zur Vermeidung von Kavitationsgeräuschen beim Auftreten von Aufschlagsbelastungen. Hierzu weist der Rand eines beweglichen Ventilelements eine ringförmige elastische Lippe auf, welche einem Überdruck zwischen zwei Hydraulikkammern, zwischen denen das bewegliche Ventilelement angeordnet ist, durch eine Hin- und Her-Bewegung nachgeben kann, um einen Druckausgleich zwischen den beiden Hydraulikkammern zu ermöglichen.

Die US 2013/043626 A1 beschreibt ein Trennelement zur Unterteilung einer primären Flüssigkeitskammer und einer sekundären Flüssigkeitskammer, welches mit einem Dämpfungsöffnungsdurchgang und einem elastischen Trennelement versehen ist. Ein Stopperschenkelabschnitt ist einstückig mit einer unteren Wand eines elastischen Membranabschnitts, der in einem zentralen Bereich des elastischen Trennelements vorgesehen ist, ausgebildet und ragt aus dieser heraus, so dass er auf eine gepresste Oberfläche einer Stützwand eines Rahmenelements gedrückt wird. Eine dritte Flüssigkeitskammer wird durch die Stützwand, das elastische Trennelement und den Stopfenschenkelabschnitt definiert und ist in der Nähe einer primären Flüssigkeitskammerseitenöffnung des Dämpfungsöffnungsdurchgangs durch einen Entlastungsdurchgang geöffnet. Der Durchmesser der gepressten Oberfläche vergrößert sich nach oben hin.

Eine Aufgabe der vorliegenden Erfindung ist es, ein Hydrolager der eingangs beschriebenen Art bereitzustellen, bei dem ein Druckausgleich auf alternative Art und Weise erreicht werden kann. Insbesondere soll ein Hydrolager der eingangs beschriebenen Art bereitgestellt werden, so dass ein Druckausgleich auch bei seitlich angeordneter Ausgleichskammer und bzw. oder bei einem spiralförmigen Drosselkanal erreicht werden kann. Insbesondere soll dies für ein steuerbares Hydrolager ermöglicht werden, welches insbesondere ein invertiertes steuerbares Hydrolager sein kann.

Die Aufgabe wird erfindungsgemäß durch ein Hydrolager mit den Merkmalen gemäß Anspruch 1, durch einen Motor mit den Merkmalen nach Anspruch 12 sowie durch ein Kraftfahrzeug mit den Merkmalen nach Anspruch 13 gelöst. Vorteilhafte Weiterbildungen sind in den Unteransprüchen beschrieben.

Somit betrifft die vorliegende Erfindung ein Hydrolager, welches insbesondere ein steuerbares Hydrolager sein kann. Das Hydrolager weist eine erste Fluidkammer, eine zweite Fluidkammer und einen Drosselkanal auf, welcher die erste Fluidkammer und die zweite Fluidkammer fluidströmend verbinden kann. Als Fluid kann vorzugsweise eine inkompressible Hydraulikflüssigkeit verwendet werden, wie bei Hydrolagern üblich.

Das erfindungsgemäße Hydrolager zeichnet sich dadurch aus, dass ein Druckausgleichselement innerhalb des Drosselkanals derart angeordnet und ausgebildet ist, bei Überschreitung eines vorbestimmten Drucks eine fluidströmende Verbindung zwischen dem Drosselkanal und einer der beiden Fluidkammern herzustellen, wobei der Drosselkanal zwischen einer oberen Drosselscheibe und einer unteren Drosselscheibe gebildet wird, wobei das Druckausgleichselement durch eine Aussparung der oberen Drosselscheibe und eine elastische Klappe der unteren Drosselscheibe gebildet wird, wobei die elastische Klappe als integraler Bestandteil der unteren Drosselscheibe ausgebildet ist oder umgekehrt.

Dabei ist der vorbestimmte Druck, bei dem eine fluidströmende Verbindung hergestellt wird, derart gewählt, dass ein Über- bzw. Unterdruck im Fluid, der zu einer Gasbildung führen kann, vermieden werden kann. Dies kann dadurch erreicht werden, dass bevor es zu einem Über- bzw. Unterdruck kommen kann, welcher eine Gasbildung bewirken könnte, das Druckausgleichselement öffnet und sich hierdurch der Über- bzw. Unterdruck in den Drosselkanal oder in eine der beiden Fluidkammern abbauen kann. Hierdurch können Kavitationseffekte und die hierdurch entstehenden Geräusche vermieden werden.

Die erste Fluidkammer kann die Arbeitskammer und die zweite Fluidkammer die Ausgleichskammer des Hydrolagers sein. Eine der Fluidkammern kann jedoch auch eine Fluidkammer sein, welche weder die Arbeitskammer noch die Ausgleichkammer des Hydrolagers ist.

Erfindungsgemäß kann das Druckausgleichselement hierbei derart innerhalb des Drosselkanals angeordnet sein, so dass von dem Fluid zumindest eine Teilstrecke des Drosselkanals zurückgelegt wird, bevor das Fluid auf das Druckausgleichselement trifft und es an dieser Stelle zu einem Abbau eines Über- bzw. Unterdrucks kommen kann. Hierdurch kann die restliche Strecke des Drosselkanals durch das Druckausgleichselement überbrückt bzw. kurzgeschlossen werden. Hierdurch wirkt im Fall eines Abbaus eines Über- bzw. Unterdrucks über das Druckausgleichselement lediglich die Teilstrecke des Drosselkanals bis zum Druckausgleichselement. Mit anderen Worten kann durch diese Art der Anordnung eines Druckausgleichselements der Drosselkanal verkürzt werden.

Dies kann erfindungsgemäß zusätzlich zum Abbau eines Über- bzw. Unterdrucks bewirken, dass das Fluid mit einer geringeren Amplitude durch den Drosselkanal strömt.

Hierdurch können auch die Fluidresonanzen in der Frequenzlage verschoben werden. Dies kann zusätzlich zum Abbau eines Über- bzw. Unterdrucks die Kavitationseffekte stark reduzieren bzw. sicher vollständig verhindern.

Vorteilhaft ist hierbei ferner, dass die Wirkung des im Drosselkanal angeordneten Druckausgleichselements in Abhängigkeit von der Frequenz der Schwingungen unterschiedlich sein kann. So kann der Drosselkanal bei Schwingungen im Dämpfungsbereich, in dem üblicherweise Kavitationseffekte auftreten können, d.h. bis ca. 20 Hz, durch das Öffnen des Druckausgleichselements zum Teil kurzgeschlossen werden. Hierdurch kann die Frequenzlage der Dämpfung des Hydrolagers gezielt verschoben werden. Die gleichzeitig auftretende Absenkung des Strömungswiderstands des Drosselkanals durch den Kurzschluss kann jedoch nur geringfügig ausfallen, so dass diesbezüglich eine Veränderung des Dämpfungsverhaltens des Hydrolagers möglichst gering gehalten werden kann. Im höherfrequenten Bereich über ca. 20 Hz hingegen kann das Öffnen des Druckausgleichselements trotz Kurzschluss des Drosselkanals keinen Einfluss auf die dynamische Steifigkeit des Hydrolagers haben, so dass der Vorteil der Verschiebung der Frequenzlage des Hydrolagers bei niedrigeren Frequenzen genutzt werden kann, ohne das Hydrolager im Übrigen zu verändern.

Hierdurch unterscheidet sich das im Drosselkanal angeordnete Druckausgleichselement des erfindungsgemäßen Hydrolagers von einem Bypass, der direkt zwischen Arbeits- und Ausgleichskammer angeordnet ist, da dieser Bypass im gesamten Frequenzbereich, d.h. auch über ca. 20 Hz, wirkt und in diesem Frequenzbereich zu einer Reduktion der Steifigkeit der Arbeitskammer und zu einem Absinken der Aktor-Lager-Resonanz führen kann.

Das Druckausgleichselement kann zwischen dem Drosselkanal und einer Fluidkammer, welche die Arbeitskammer oder die Ausgleichskammer sein kann, angeordnet sein. Das Druckausgleichselement kann aber auch zwischen zwei Abschnitten des Drosselkanals angeordnet sein.

Das Druckausgleichselement durch eine Aussparung der oberen Drosselscheibe und eine elastische Klappe der unteren Drosselscheibe zu bilden hat den Vorteil, dass auf zusätzliche Bauteile verzichtet werden kann, weil die elastische Klappe als integraler Bestandteil der unteren Drosselscheibe ausgebildet wird. Dies kann auch die Kosten dieser Maßnahme gering halten. Ebenso kann der erforderliche Bauraum minimal gehalten werden. Dies gilt insbesondere, falls die untere Drosselscheibe ohnehin als Vulkanisationsteil eine gummierte Oberfläche aufweist, z.B. um an bestimmten Stellen der unteren Drosselscheibe eine elastische Dichtung auszubilden. Dann kann diese gummierte Oberfläche im Bereich der Aussparung der oberen Drosselscheibe entsprechend höher von der Oberfläche abstehend ausgebildet werden, um die elastische Klappe des Druckausgleichselements zu bilden. Die elastische Klappe kann auch als hochstehender Nippel aus Gummi bezeichnet werden. Die untere Drosselscheibe kann auch als Aktordeckel dienen, falls ein steuerbares Hydrolager mit einem Linearaktor vorliegt. Vorteilhaft ist dabei, dass über die Gestaltung der elastischen Klappe der Druck eingestellt werden kann, ab dem das Druckausgleichselement öffnen kann. Dies kann über die Wahl des elastischen Materials und bzw. oder über die Form bzw. Dicke der elastischen Klappe erfolgen. Hierdurch kann das Verhalten des Druckausgleichselements vorbestimmt werden.

Gemäß einem Aspekt der vorliegenden Erfindung ist die elastische Klappe von der unteren Drosselscheibe weg dünner werdend ausgebildet. Hierdurch verringert sich die Steifigkeit der elastischen Klappe zu ihrem oberen Ende hin, so dass sich der dünnste Teilbereich der elastischen Klappe schon bei geringeren Drücken im Drosselkanal biegen lässt und die Aussparung der oberen Drosselscheibe freigibt. Steigt der Druck im Drosselkanal weiter an, so können hierdurch auch die dickeren Teilbereiche der elastischen Klappe aufgebogen werden, so dass sich mit steigendem Druck auch die Öffnung des Druckausgleichselements und damit das Maß des Druckabbaus vergrößert. Dies gilt umgekehrt für das Schließen des Druckausgleichelements. Auf diese Weise kann ein sachtes Öffnen und Schließen des Druckausgleichselements erreicht werden, wodurch die Entstehung von weiteren Druckspitzen vermieden werden kann.

Gemäß einem weiteren Aspekt der vorliegenden Erfindung ist das Druckausgleichselement ausgebildet und angeordnet, so dass die Bewegungsrichtung des Druckausgleichselements zumindest im Wesentlichen senkrecht zur Fluidströmungsrichtung steht. Mit anderen Worten ist das Druckausgleichselement derart im Drosselkanal ausgebildet und angeordnet, dass die Strömung des Fluids zumindest im Wesentlichen senkrecht an dem Druckausgleichselement vorbei erfolgen kann. Hierzu kann das Druckausgleichselement beispielsweise in einer Wand des Drosselkanals integriert angeordnet sein. Das Druckausgleichselement kann insbesondere in einem Abschnitt des Drosselkanals angeordnet sein, welcher vom Eingang sowie Ausgang des Drosselkanals entfernt ist, so dass hier eine Fluidströmungsrichtung an den Wänden des Drosselkanals vorbei erfolgen kann. Hierdurch kann das Öffnen des Druckausgleichselements in Reaktion auf einen Druckanstieg des Fluids auch verzögert werden.

Gemäß einem weiteren Aspekt der vorliegenden Erfindung ist das Druckausgleichselement ausgebildet und angeordnet, so dass die Bewegungsrichtung des Druckausgleichselements zumindest im Wesentlichen mit der Fluidströmungsrichtung zusammenfällt. Mit anderen Worten ist das Druckausgleichselement derart im Drosselkanal ausgebildet und angeordnet, dass die Strömung des Fluids zumindest im Wesentlichen senkrecht auf das Druckausgleichselement treffen kann. Hierzu kann das Druckausgleichselement beispielsweise in einer Wand des Drosselkanals integriert angeordnet sein. Das Druckausgleichselement kann insbesondere in einem Abschnitt des Drosselkanals angeordnet sein, welcher den Eingang und bzw. oder den Ausgang des Drosselkanals bildet, so dass hier eine Fluidströmungsrichtung auf die Wände des Drosselkanals drauf gerichtet erfolgen kann. Hierdurch kann das Öffnen des Druckausgleichselements in Reaktion auf einen Druckanstieg des Fluids auch beschleunigt werden.

Gemäß einem weiteren Aspekt der vorliegenden Erfindung ist der Drosselkanal spiralförmig ausgebildet. Auf diese Weise liegt der Drosselkanal in einer horizontalen Ebene unterhalb der ersten Fluidkammer wie insbesondere der Arbeitskammer. Hierdurch kann eine kompakte Anordnung des Drosselkanals erreicht werden. Ferner kann der spiralförmige Drosselkanal eine Verbindung zu einer zweiten Fluidkammer wie insbesondere der Ausgleichskammer herstellen, welche nicht unterhalb des Drosselkanals sondern seitlich vom Drosselkanal bzw. seitlich der ersten Fluidkammer angeordnet sein kann.

Gemäß einem weiteren Aspekt der vorliegenden Erfindung ist die zweite Fluidkammer zumindest teilweise horizontal neben der ersten Fluidkammer angeordnet. Hierdurch kann ein in der Höhe kompakter Aufbau des Hydrolagers erreicht werden.

Gemäß einem Aspekt der vorliegenden Erfindung ist das Druckausgleichselement innerhalb des Drosselkanals näher an der ersten Fluidkammer als an der zweiten Fluidkammer, insbesondere nahe am Drosselkanaleingang, angeordnet. Hierdurch kann die Teilstrecke des Drosselkanals, welche auch im Fall eines Abbaus eines Über- bzw. Unterdrucks wirksam ist, verkürzt werden, so dass ähnliche Dämpfungsverluste wie bei bekannten Hydrolagern erreicht werden können. Mit anderen Worten ist der auftretende Druck bzw. Druckgradient umso größer, desto kürzer die vom Fluid durchströmte Strecke des Drosselkanals vor dem Erreichen des Druckausgleichselement ist, d.h. desto weiter vorne im Drosselkanal das Druckausgleichselement angeordnet ist.

Gemäß einem weiteren Aspekt der vorliegenden Erfindung ist das Druckausgleichselement innerhalb des Drosselkanals näher an der zweiten Fluidkammer als an der ersten Fluidkammer, insbesondere nahe am Drosselkanalausgang, angeordnet. Hierdurch kann die Teilstrecke des Drosselkanals, welche auch im Fall eines Abbaus eines Über- bzw. Unterdrucks wirksam ist, vergrößert werden, so dass Dämpfungsverluste wie bei bekannten Hydrolagern möglichst vermieden werden können. Mit anderen Worten ist der auftretende Druck bzw. Druckgradient umso kleiner, desto länger die vom Fluid durchströmte Strecke des Drosselkanals vor dem Erreichen des Druckausgleichselement ist, d.h. desto weiter hinten im Drosselkanal das Druckausgleichselement angeordnet ist.

Gemäß einem weiteren Aspekt der vorliegenden Erfindung ist ein Druckausgleichselement innerhalb des Drosselkanals näher an der ersten Fluidkammer als an der zweiten Fluidkammer, insbesondere nahe am Drosselkanaleingang, und ein weiteres Druckausgleichselement innerhalb des Drosselkanals näher an der zweiten Fluidkammer als an der ersten Fluidkammer, insbesondere nahe am Drosselkanalausgang, angeordnet. Durch die Verwendung von zwei Druckausgleichselementen, von denen wenigstens eins durch eine elastische Klappe der unteren Drosselscheibe in einer Aussparung der oberen Drosselscheibe, oder umgekehrt, gebildet wird, vorzugsweise beide Druckausgleichselemente derart ausgebildet sind, kann die druckausgleichende Wirkung vielfältiger beeinflusst werden. Dies gilt sowohl für die jeweilige Ausgestaltung als auch Anordnung der beiden Druckausgleichselemente.

Werden die beiden Druckausgleichselemente am Drosselkanaleingang sowie am Drosselkanalausgang angeordnet, so kann eine zumindest nahezu vollständige Überbrückung des Drosselkanals erfolgen.

Gemäß einem weiteren Aspekt der vorliegenden Erfindung ist das Druckausgleichselement ausgebildet, eine fluidströmende Verbindung zwischen dem Drosselkanal und einer der beiden Fluidkammern nur in einer Fluidströmungsrichtung herzustellen. Hierdurch kann die erfindungsgemäße Wirkung auf lediglich eine Strömungsrichtung des Fluids beschränkt werden.

Gemäß einem weiteren Aspekt der vorliegenden Erfindung ist das Druckausgleichselement ausgebildet, eine fluidströmende Verbindung zwischen dem Drosselkanal und einer der beiden Fluidkammern in beide Fluidströmungsrichtungen herzustellen. Hierdurch kann die erfindungsgemäße Wirkung in beide Strömungsrichtungen des Fluids angewendet werden.

Die vorliegende Erfindung betrifft auch einen Motor mit einem Hydrolager wie zuvor beschrieben.

Die vorliegende Erfindung betrifft auch ein Kraftfahrzeug mit einem Motor wie zuvor beschrieben.

Ein Ausführungsbeispiel und weitere Vorteile der Erfindung werden nachstehend im Zusammenhang mit den folgenden Figuren erläutert. Darin zeigt:
- Fig. 1: eine schematische Schnittdarstellung eines invertierten steuerbaren Hydrolagers gemäß dem Stand der Technik;
- Fig. 2: eine schematische Schnittdarstellung eines invertierten steuerbaren Hydrolagers mit seitlich angeordneter Ausgleichskammer gemäß der vorliegenden Erfindung;
- Fig. 3: eine schematische perspektivische Darstellung einer erfindungsgemäßen oberen Drosselscheibe von unten;
- Fig. 4: eine schematische perspektivische Darstellung einer erfindungsgemäßen unteren Drosselscheibe von oben;
- Fig. 5: eine schematische perspektivische Detailansicht der Fig. 2, und
- Fig. 6: eine schematische perspektivische Detailansicht der Fig. 5.

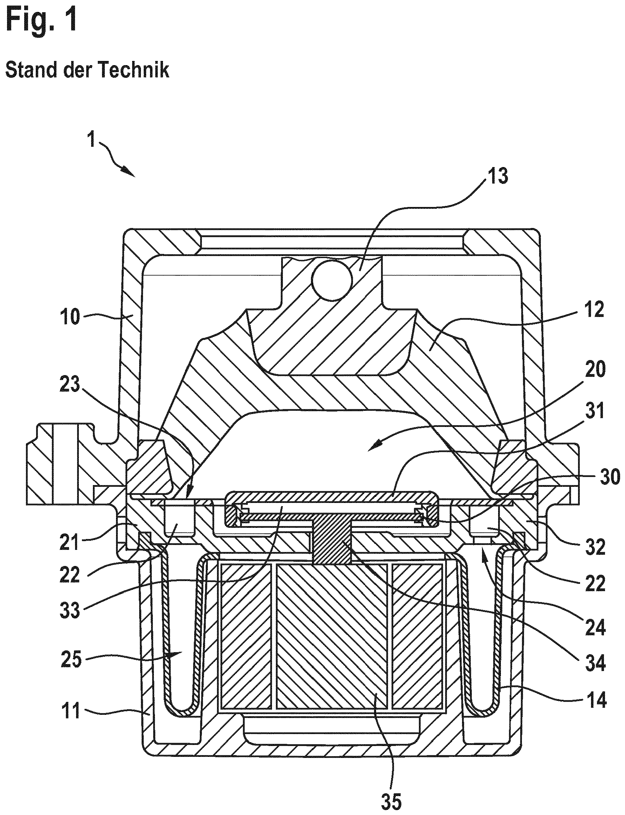

Fig. 1 zeigt eine schematische Schnittdarstellung eines invertierten steuerbaren Hydrolagers 1 gemäß dem Stand der Technik. Das Äußere des Hydrolagers 1 wird oben durch ein Lagergehäuse 10 und unten durch einen Lagerdeckel 11 gebildet. Im Lagergehäuse 10 ist ein elastomerer Tragkörper 12 in Form einer elastomeren Tragfeder 12 angeordnet, welche nach oben mit ihrer Befestigung 13 aus dem Lagerdeckel 11 heraus ragt. An der Befestigung 13 kann z.B. ein Motor eines Kraftfahrzeugs montiert werden, dessen Schwingungen durch das Hydrolager 1 zu bedämpfen bzw. zu isolieren sind. Innerhalb des unteren Lagerdeckels 11 ist eine Rollmembran 14 angeordnet.

Etwa in der Höhe mittig ist innerhalb des Hydrolagers 1 eine Drosseleinheit 21 angeordnet. Durch die obere Seite der Drosseleinheit 21 und die Innenseite der elastomeren Tragfeder 12 wird eine erste Fluidkammer 20 als Arbeitskammer 20 des Hydrolagers 1 gebildet. Die untere Seite der Drosseleinheit 21 und die Innenseite der Rollmembran 14 bilden eine zweite Fluidkammer 25 als Ausgleichskammer 25 des Hydrolagers 1. Innerhalb der Drosseleinheit 21 ist ein Drosselkanal 22 ausgebildet, welcher im Wesentlichen horizontal und ringförmig verläuft. Der Drosselkanal 22 weist zur Arbeitskammer 20 hin einen Drosselkanaleingang 23 und zur Ausgleichskammer 25 hin einen Drosselkanalausgang 24 auf.

Der Drosselkanal 21 verbindet die Arbeitskammer 20 und die Ausgleichskammer 25 fluidströmend miteinander, so dass ein Fluid wie eine Hydraulikflüssigkeit zwischen Arbeitskammer 20 und Ausgleichskammer 25 über den Drosselkanal 22 ausgetauscht werden kann. Der Strömungswiderstand, den der Drosselkanal 22 für das Fluid darstellt, beeinflusst das Dämpfungs- und Isolationsverhalten des Hydrolagers 1.

Aufgrund seiner Funktionsweise als steuerbares Hydrolager 1 weist das Hydrolager 1 im Lagerdeckel 11 einen elektromagnetischen Linearaktor 35 auf, welcher innerhalb der Rollmembran 14 angeordnet ist, die ringförmig um den elektromagnetischen Linearaktor35 herum verläuft. Der elektromagnetische Linearaktor35 kann einen Aktorstößel 34 in der Höhe hoch und runter bewegen. Der Aktorstößel 34 ist an seinem oberen Ende kreisrund und tellerförmig ausgebildet. Die seitlichen Kanten des Aktorstößels 34 sind über eine Ansteuermembran 30 elastisch mit einer oberen Drosselscheibe 31 verbunden, so dass zwischen der Unterseite der oberen Drosselscheibe 31 und der oberen Seite des Aktorstößels 34 sowie der Ansteuermembran 30 eine Luftkammer 33 ausgebildet wird, die ein geschlossenes Luftvolumen aufweist. Dies macht das vorliegende Hydrolager 1 zu einem invertierten steuerbaren Hydrolager 1.

Der Teil der Drosseleinheit 21, welche den Drosselkanal 22 aufweist, kann als untere Drosselscheibe 32 bezeichnet werden, wobei der Drosselkanaleingang 23 durch die obere Drosselscheibe 31 hindurch ausgebildet ist. Die untere Drosselscheibe 32 bildet gleichzeitig den Aktordeckel 32, d.h. die obere Abdeckung des elektromagnetischen Linearaktors 35.

Bei einem derartigen bekannten Hydrolager 1 kann es durch Über- bzw. Unterdruck in einer der Fluidkammern 20, 25 zur Entstehung von Gas im Fluid kommen, dessen Rückwandlung zu Geräuschen in Form von Kavitationseffekten führen kann. Diese gilt es üblicherweise zu vermeiden.

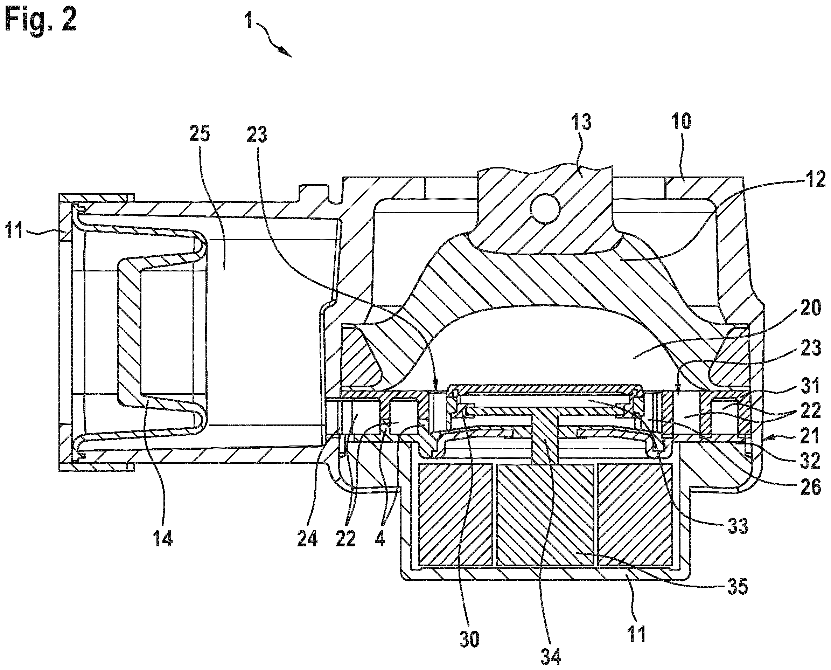

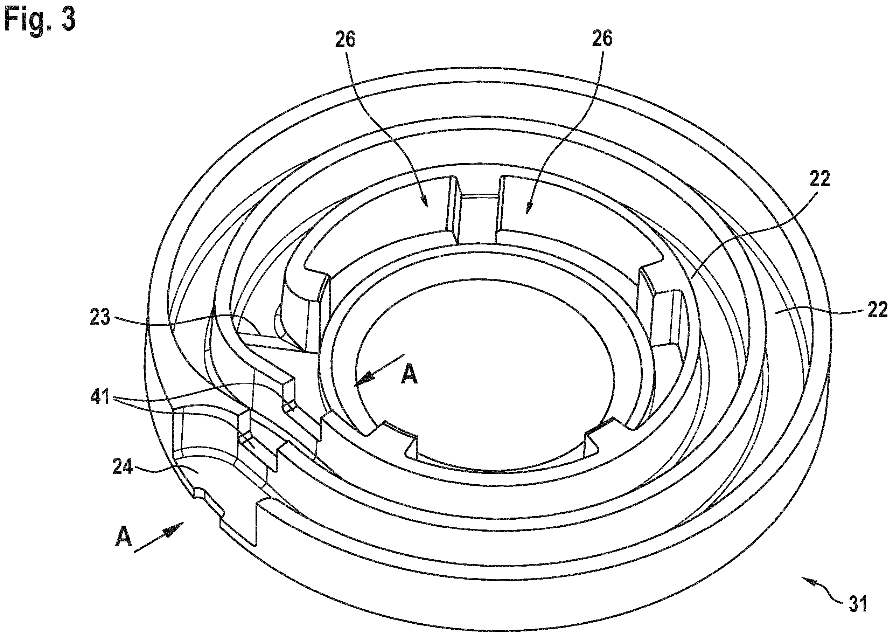

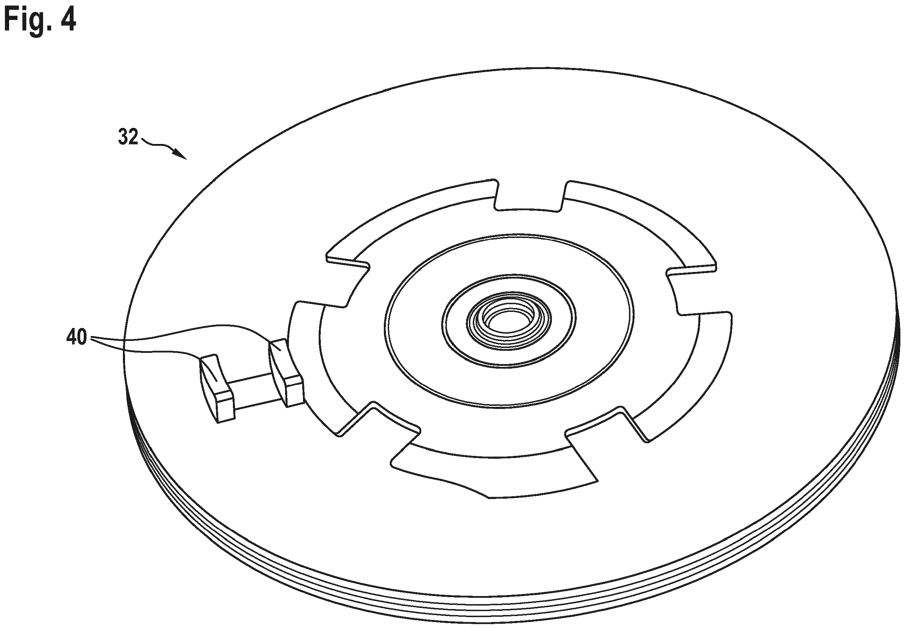

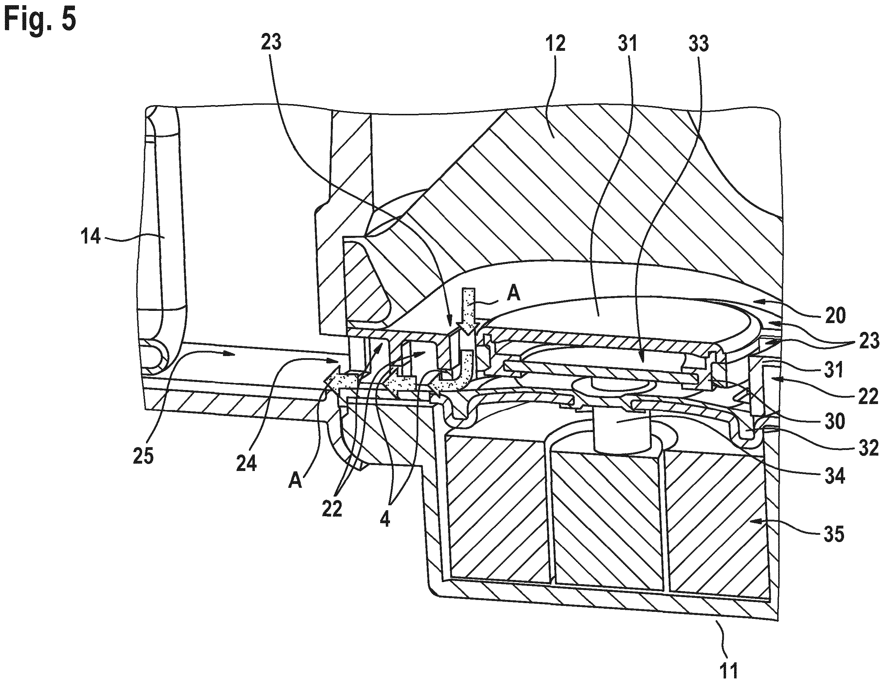

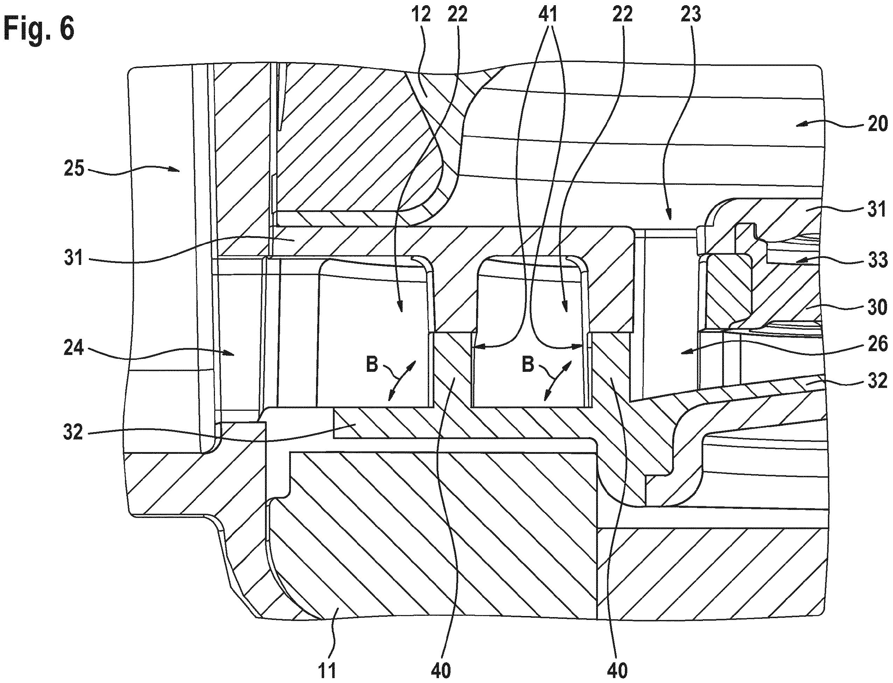

Fig. 2 zeigt eine schematische Schnittdarstellung eines invertierten steuerbaren Hydrolagers 1 mit seitlich angeordneter Ausgleichskammer 25 gemäß der vorliegenden Erfindung. Fig. 3 zeigt eine schematische perspektivische Darstellung einer erfindungsgemäßen oberen Drosselscheibe 31 von unten. Fig. 4 zeigt eine schematische perspektivische Darstellung einer erfindungsgemäßen unteren Drosselscheibe 32 von oben. Fig. 5 zeigt eine schematische perspektivische Detailansicht der Fig. 2. Fig. 6 zeigt eine schematische perspektivische Detailansicht der Fig. 5.

Im Gegensatz zu dem Hydrolager 1 der Fig. 1 weist das Hydrolager 1 der Fig. 2 bis 6 eine seitlich angeordnete Ausgleichskammer 25 auf. Der Drosselkanal 22 ist daher spiralförmig ausgebildet, so dass dessen Drosselkanalausgang 24 seitlich in die Ausgleichskammer 25 mündet. Der Drosselkanaleingang 23 weist einen Verbindungskanal 26 auf, welcher ringförmig um den radial mittleren Bereich der oberen Drosselscheibe 31 erläuft und die Ansteuermembran 30mit der Arbeitskammer 20 fluidführend verbindet. Erfindungsgemäß weist das Hydrolager 1 der Fig. 2 bis 6 zwei Druckausgleichselemente 4 auf, welche innerhalb des Drosselkanals 22 derart angeordnet und ausgebildet sind, dass über die Druckausgleichselemente 4 im Falle eines vorbestimmten Über- bzw. Unterdrucks ein Druckausgleich zwischen der Arbeitskammer 20 und der Ausgleichskammer 25 erfolgen kann. Der vorbestimmte Druck, bei dem zumindest ein Druckausgleichselement 4 öffnet, kann durch seine Gestaltung vorbestimmt sein. Hierdurch kann ein Über- bzw. Unterdruck, welcher sonst zur Gasbildung führen könnte, vermieden werden, sodass hierdurch auch die Kavitationseffekte beseitigt werden können.

Erfindungsgemäß wird hierbei der Drosselkanal 22 teilweise vom Fluid durchströmt und gleichzeitig teilweise über die Druckausgleichselemente 4 überbrückt, so dass zum einen eine Vermeidung von Über- bzw. Unterdruck erreicht werden, jedoch gleichzeitig die Wirkung des Drosselkanals 22 beibehalten werden kann. Hierbei kann durch die Anordnung der Druckausgleichselemente 4 näher am Drosselkanaleingang 23 und bzw. oder näher am Drosselkanalausgang 24 zwischen diesen beiden Wirkungen die für den jeweiligen Anwendungsfall optimale Einstellung erreicht werden.

Erfindungsgemäß wird das Druckausgleichselement 4 durch eine elastische Klappe 40, welche als integraler Bestandteil der vulkanisierten unteren Drosselscheibe 32 ausgebildet ist, siehe z.B. Fig. 4, sowie eine entsprechende Aussparung 41 der oberen Drosselscheibe 31, siehe z.B. Fig. 3, gebildet. Strömt das Fluid in seiner Fluidströmungsrichtung A aus der Richtung der Arbeitskammer 20 durch den Drosselkanaleingang 23 auf die radial innere Klappe 40 zu, so klappt diese zumindest mit ihrer von der unteren Drosselscheibe 32 weg zeigenden Spitze nach radial außen in einer Bewegungsrichtung B weg. Hierdurch kann eine Umrundung des spiralförmigen Drosselkanals 22 überbrückt werden, während die zweite Umrundung des spiralförmigen Drosselkanals 22 ihre Wirkung beibehält. Wird dennoch ein Druck seitens der Arbeitskammer 20 erreicht bzw. beibehalten, der auch das radial äußere Druckausgleichselement 4 zum Öffnen bewegt, so wird auch die zweite Umrundung des spiralförmigen Drosselkanals 22 überbrückt. In diesem Fall wird zumindest kurzzeitig eine im Wesentlichen direkte Verbindung zwischen der Arbeitskammer 20 und der Ausgleichskammer 25 hergestellt, welche schnell zum Abbau des Überdrucks in der Arbeitskammer 20 führen und somit Druckspitzen, welche zur Entstehung von Kavitationseffekten führen können, vermeiden kann.

### Bezugszeichenliste (Teil der Beschreibung)

- A: Fluidströmungsrichtung
- B: Bewegungsrichtung des Druckausgleichselements 4 bzw. dessen elastischer Klappe 40

- 1: Hydrolager
- 10: Lagergehäuse
- 11: Lagerdeckel
- 12: elastomerer Tragkörper bzw. elastomere Tragfeder
- 13: Befestigung des Tragkörpers 12
- 14: Rollmembran der Ausgleichskammer 25

- 20: erste Fluidkammer, Arbeitskammer
- 21: Drosseleinheit
- 22: (spiralförmiger) Drosselkanal
- 23: Drosselkanaleingang
- 24: Drosselkanalausgang
- 25: zweite Fluidkammer, Ausgleichskammer
- 26: Verbindungskanal

- 30: Ansteuermembran
- 31: obere Drosselscheibe
- 32: untere Drosselscheibe, Aktordeckel
- 33: Luftkammer
- 34: Aktorstößel
- 35: elektromagnetischer Linearaktor

- 4: Druckausgleichselement
- 40: elastische Klappe der unteren Drosselscheibe 32
- 41: Aussparung der oberen Drosselscheibe 31

## Patentansprüche

1. Hydrolager (1), insbesondere steuerbares Hydrolager (1), mit
einer ersten Fluidkammer (20), vorzugsweise einer Arbeitskammer (20),
einer zweiten Fluidkammer (25), vorzugsweise einer Ausgleichkammer (25), und einem Drosselkanal (22), welcher die erste Fluidkammer (20) und die zweite Fluidkammer (25) fluidströmend verbinden kann,
wobei wenigstens ein Druckausgleichselement (4) innerhalb des Drosselkanals (22) derart angeordnet und ausgebildet ist, bei Überschreitung eines vorbestimmten Drucks eine fluidströmende Verbindung zwischen dem Drosselkanal (22) und einer der beiden Fluidkammern (20; 25) herzustellen,
wobei der Drosselkanal (22) zwischen einer oberen Drosselscheibe (31) und einer unteren Drosselscheibe (32) gebildet wird,
wobei das Druckausgleichselement (4) durch eine Aussparung (41) der oberen Drosselscheibe (31) und eine elastische Klappe (40) der unteren Drosselscheibe (32) gebildet wird,
**dadurch gekennzeichnet, dass**
die elastische Klappe (40) als integraler Bestandteil der unteren Drosselscheibe (2) ausgebildet ist, oder umgekehrt.

2. Hydrolager (1) gemäß Anspruch 1,
wobei die elastische Klappe (40) von der unteren Drosselscheibe (32) weg dünner werdend ausgebildet ist.

3. Hydrolager (1) gemäß Anspruch 1 oder 2,
wobei das Druckausgleichselement (4) ausgebildet und angeordnet ist, so dass die Bewegungsrichtung (B) des Druckausgleichselements (4) zumindest im Wesentlichen senkrecht zur Fluidströmungsrichtung (A) steht.

4. Hydrolager (1) gemäß Anspruch 1 oder 2,
wobei das Druckausgleichselement (4) ausgebildet und angeordnet ist, so dass die Bewegungsrichtung (B) des Druckausgleichselements (4) zumindest im Wesentlichen mit der Fluidströmungsrichtung (A) zusammenfällt.

5. Hydrolager (1) gemäß einem der vorherigen Ansprüche,
wobei der Drosselkanal (22) spiralförmig ausgebildet ist.

6. Hydrolager (1) gemäß einem der vorherigen Ansprüche,
wobei die zweite Fluidkammer (25) zumindest teilweise horizontal neben der ersten Fluidkammer (20) angeordnet ist.

7. Hydrolager (1) gemäß einem der vorherigen Ansprüche,
wobei das Druckausgleichselement (4) innerhalb des Drosselkanals (22) näher an der ersten Fluidkammer (20) als an der zweiten Fluidkammer (25), insbesondere nahe am Drosselkanaleingang (23), angeordnet ist.

8. Hydrolager (1) gemäß einem der Ansprüche 1 bis 6,
wobei das Druckausgleichselement (4) innerhalb des Drosselkanals (22) näher an der zweiten Fluidkammer (25) als an der ersten Fluidkammer (20), insbesondere nahe am Drosselkanalausgang (24), angeordnet ist.

9. Hydrolager (1) gemäß einem der vorherigen Ansprüche,
wobei ein Druckausgleichselement (4) innerhalb des Drosselkanals (22) näher an der ersten Fluidkammer (20) als an der zweiten Fluidkammer (25), insbesondere nahe am Drosselkanaleingang (23), und ein weiteres Druckausgleichselement (4) innerhalb des Drosselkanals (22) näher an der zweiten Fluidkammer (25) als an der ersten Fluidkammer (20), insbesondere nahe am Drosselkanalausgang (24), angeordnet ist.

10. Hydrolager (1) gemäß einem der vorherigen Ansprüche,
wobei das Druckausgleichselement (4) ausgebildet ist, eine fluidströmende Verbindung zwischen dem Drosselkanal (22) und einer der beiden Fluidkammern (20; 25) nur in einer Fluidströmungsrichtung (A) herzustellen.

11. Hydrolager (1) gemäß einem der Ansprüche 1 bis 9,
wobei das Druckausgleichselement (4) ausgebildet ist, eine fluidströmende Verbindung zwischen dem Drosselkanal (22) und einer der beiden Fluidkammern (20; 25) in beide Fluidströmungsrichtungen (A) herzustellen.

12. Motor, mit
einem Hydrolager (1) gemäße einem der vorherigen Ansprüche.

13. Kraftfahrzeug, mit
einem Motor gemäß des Anspruchs 12.

## Claims

1. Hydraulic bearing (1), in particular a controllable hydraulic bearing (1), having a first fluid chamber (20), preferably a working chamber (20),
a second fluid chamber (25), preferably a compensation chamber (25), and
a throttle channel (22), which can connect the first fluid chamber (20) and the second fluid chamber (25) such that fluid can flow, wherein
at least one pressure compensation element (4) is arranged and formed within the throttle channel (22) in such a way as to produce a fluid-carrying connection between the throttle channel (22) and one of the two fluid chambers (20; 25) when a predetermined pressure is exceeded,
wherein the throttle channel (22) is formed between an upper throttle disc (31) and a lower throttle disc (32),
wherein the pressure compensation element (4) is formed by a cut-out (41) in the upper throttle disc (31) and an elastic flap (40) of the lower throttle disc (32),
**characterized in that**
the elastic flap (40) is formed as an integral constituent part of the lower throttle disc (2) or vice versa.

2. Hydraulic bearing (1) according to Claim 1,
wherein the elastic flap (40) is designed to become thinner away from the lower throttle disc (32).

3. Hydraulic bearing (1) according to Claim 1 or 2,
wherein the pressure compensation element (4) is designed and arranged such that the direction of movement (B) of the pressure compensation element (4) is at least substantially perpendicular to the fluid flow direction (A).

4. Hydraulic bearing (1) according to Claim 1 or 2,
wherein the pressure compensation element (4) is designed and arranged such that the direction of movement (B) of the pressure compensation element (4) at least substantially coincides with the fluid flow direction (A).

5. Hydraulic bearing (1) according to one of the preceding claims,
wherein the throttle channel (22) is formed as a spiral.

6. Hydraulic bearing (1) according to one of the preceding claims,
wherein the second fluid chamber (25) is arranged at least partly horizontally beside the first fluid chamber (20).

7. Hydraulic bearing (1) according to one of the preceding claims,
wherein the pressure compensation element (4) is arranged within the throttle channel (22) closer to the first fluid chamber (20) than to the second fluid chamber (25), in particular close to the throttle channel inlet (23).

8. Hydraulic bearing (1) according to one of Claims 1 to 6,
wherein the pressure compensation element (4) is arranged within the throttle channel (22) closer to the second fluid chamber (25) than to the first fluid chamber (20), in particular close to the throttle channel outlet (24).

9. Hydraulic bearing (1) according to one of the preceding claims,
wherein a pressure compensation element (4) is arranged within the throttle channel (22) closer to the first fluid chamber (20) than to the second fluid chamber (25), in particular close to the throttle channel inlet (23), and a further pressure compensation element (4) is arranged within the throttle channel (22) closer to the second fluid chamber (25) than to the first fluid chamber (20), in particular close to the throttle channel outlet (24).

10. Hydraulic bearing (1) according to one of the preceding claims,
wherein the pressure compensation element (4) is designed to form a fluid-carrying connection in only one fluid flow direction (A) between the throttle channel (22) and one of the two fluid chambers (20; 25).

11. Hydraulic bearing (1) according to one of Claims 1 to 9,
wherein the pressure compensation element (4) is designed to produce a fluid-carrying connection in both fluid flow directions (A) between the throttle channel (22) and one of the two fluid chambers (20; 25).

12. Motor, having
a hydraulic bearing (1) according to one of the preceding claims.

13. Motor vehicle, having
a motor according to Claim 12.

## Revendications

1. Palier hydraulique (1), en particulier palier hydraulique (1) commandable, comprenant
une première chambre de fluide (20), de préférence une chambre de travail (20), une deuxième chambre de fluide (25), de préférence une chambre de compensation (25), et
un canal d'étranglement (22), lequel peut relier fluidiquement la première chambre de fluide (20) et la deuxième chambre de fluide (25),
dans lequel
au moins un élément de compensation de pression (4) est disposé et réalisé à l'intérieur du canal d'étranglement (22) pour produire, en cas de dépassement d'une pression prédéfinie, une liaison fluidique entre le canal d'étranglement (22) et l'une des deux chambres de fluide (20 ; 25),
dans lequel le canal d'étranglement (22) est formé entre un disque d'étranglement supérieur (31) et un disque d'étranglement inférieur (32),
dans lequel l'élément de compensation de pression (4) est formé par un évidement (41) du disque d'étranglement supérieur (31) et un volet élastique (40) du disque d'étranglement inférieur (32),
**caractérisé en ce que**
le volet élastique (40) est réalisé en tant que partie intégrante du disque d'étranglement inférieur (2), ou inversement.

2. Palier hydraulique (1) selon la revendication 1,
dans lequel le volet élastique (40) est réalisé de manière à devenir plus mince lorsque l'on s'éloigne du disque d'étranglement inférieur (32).

3. Palier hydraulique (1) selon la revendication 1 ou 2,
dans lequel l'élément de compensation de pression (4) est réalisé et disposé de telle sorte que la direction de déplacement (B) de l'élément de compensation de pression (4) soit au moins sensiblement perpendiculaire à la direction d'écoulement de fluide (A).

4. Palier hydraulique (1) selon la revendication 1 ou 2,
dans lequel l'élément de compensation de pression (4) est réalisé et disposé de telle sorte que la direction de déplacement (B) de l'élément de compensation de pression (4) coïncide au moins sensiblement avec la direction d'écoulement de fluide (A).

5. Palier hydraulique (1) selon l'une des revendications précédentes,
dans lequel le canal d'étranglement (22) est réalisé en forme de spirale.

6. Palier hydraulique (1) selon l'une des revendications précédentes,
dans lequel la deuxième chambre de fluide (25) est disposée au moins partiellement horizontalement à côté de la première chambre de fluide (20).

7. Palier hydraulique (1) selon l'une des revendications précédentes,
dans lequel l'élément de compensation de pression (4) est disposé à l'intérieur du canal d'étranglement (22) plus près de la première chambre de fluide (20) que de la deuxième chambre de fluide (25), en particulier près de l'entrée de canal d'étranglement (23).

8. Palier hydraulique (1) selon l'une des revendications 1 à 6,
dans lequel l'élément de compensation de pression (4) est disposé à l'intérieur du canal d'étranglement (22) plus près de la deuxième chambre de fluide (25) que de la première chambre de fluide (20), en particulier près de la sortie de canal d'étranglement (24).

9. Palier hydraulique (1) selon l'une des revendications précédentes,
dans lequel un élément de compensation de pression (4) est disposé à l'intérieur du canal d'étranglement (22) plus près de la première chambre de fluide (20) que de la deuxième chambre de fluide (25), en particulier près de l'entrée de canal d'étranglement (23), et un autre élément de compensation de pression (4) est disposé à l'intérieur du canal d'étranglement (22) plus près de la deuxième chambre de fluide (25) que de la première chambre de fluide (20), en particulier près de la sortie de canal d'étranglement (24).

10. Palier hydraulique (1) selon l'une des revendications précédentes,
dans lequel l'élément de compensation de pression (4) est réalisé pour ne produire une liaison fluidique entre le canal d'étranglement (22) et l'une des deux chambres de fluide (20 ; 25) que dans une direction d'écoulement de fluide (A).

11. Palier hydraulique (1) selon l'une des revendications 1 à 9,
dans lequel l'élément de compensation de pression (4) est réalisé pour produire une liaison fluidique entre le canal d'étranglement (22) et l'une des deux chambres de fluide (20 ; 25) dans les deux directions d'écoulement de fluide (A).

12. Moteur, comprenant
un palier hydraulique (1) selon l'une des revendications précédentes.

13. Véhicule automobile, comprenant
un moteur selon la revendication 12.
